(19) Europäisches Patentamt
European Patent Office
Office européen des brevets

(11) **EP 2 268 717 B1**

(12) **EUROPEAN PATENT SPECIFICATION**

(45) Date of publication and mention
of the grant of the patent:
**06.09.2017 Bulletin 2017/36**

(21) Application number: **09726360.2**

(22) Date of filing: **19.03.2009**

(51) Int Cl.:
**B29K 67/00** *(2006.01)*  **B29C 55/12** *(2006.01)*
**G02F 1/1335** *(2006.01)*  **G02B 5/30** *(2006.01)*
**B32B 7/02** *(2006.01)*  **B32B 7/08** *(2006.01)*
**B32B 3/08** *(2006.01)*  **B32B 27/36** *(2006.01)*
**C08J 5/18** *(2006.01)*  **B32B 27/08** *(2006.01)*

(86) International application number:
**PCT/US2009/037662**

(87) International publication number:
**WO 2009/120574 (01.10.2009 Gazette 2009/40)**

(54) **THICK POLYESTER FILMS FOR OPTICAL ARTICLES AND OPTICAL ARTICLES**

DICKE POLYESTERFOLIEN FÜR OPTISCHE GEGENSTÄNDE UND OPTISCHE GEGENSTÄNDE

FILMS POLYESTER ÉPAIS DESTINÉS À DES ARTICLES OPTIQUES ET ARTICLES OPTIQUES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008 US 40332 P**

(43) Date of publication of application:
**05.01.2011 Bulletin 2011/01**

(73) Proprietor: **3M Innovative Properties Company St. Paul, MN 55133-3427 (US)**

(72) Inventors:
• **JOHNSON, Stephen, A.**
  **Saint Paul, MN 55133-3427 (US)**
• **LIU, Yufeng**
  **Saint Paul, MN 55133-3427 (US)**

• **YUST, David, T.**
  **Saint Paul, MN 55133-3427 (US)**

(74) Representative: **Vossius & Partner Patentanwälte Rechtsanwälte mbB Siebertstrasse 3 81675 München (DE)**

(56) References cited:
**KR-A- 20000 011 493     KR-A- 20010 034 063**
**US-A- 5 474 730        US-A1- 2002 039 235**
**US-A1- 2003 016 334     US-A1- 2006 009 610**
**US-A1- 2007 242 184     US-A1- 2008 020 186**
**US-B2- 6 449 093**

• **DATABASE WPI Week 199343 Thomson Scientific, London, GB; AN 1993-339395 XP002730636, & JP H05 245994 A (TORAY IND INC) 24 September 1993 (1993-09-24)**

EP 2 268 717 B1

## Description

### Background

The demand for ever greater size and brightness of LCD based displays has been increasing. Large display size, that is a display having a diagonal greater than 37 in (94 cm), and higher power consumption, due to increased brightness demands, can cause large display films to become wavy over time. Wavy display films tend to cause defective images to be displayed on the display screen.

Current commercially available semi-crystalline polyester resins do not have appropriate quench efficiency performance necessary for making thick, clear cast web films required for making thick, oriented, optically clear, polyester films. Commercially available amorphous copolyester resins which do exhibit high levels of quench efficiency values do not provide stable oriented films due to lack of strain-induced crystalline capability (birefringence). In contrast, the polyester resins of the current invention exhibit the necessary combination of quench efficiency and strain-induced crystallinity/birefringence potential. US 2007/0242184 A1 discloses an optical sheet including a light-transmissive base; an optical functional layer provided to at least one surface of the base, in which the base is composed of a stack of transmissive sheets bonded while placing an adhesive material layer in between.

### Summary

The present invention relates to an optical film article that is based on a transparent, thick polyester film that is oriented and self-supporting and resists waviness formation when used in a large LCD display. The thick, transparent polyester film is based on a modified PET resin that has high quench efficiency.

The current invention provides a thick, optical film article that is self-supporting and resists waviness formation when used in a large LCD display.

The invention also provides optical displays which comprise a light source, an LCD panel, and a thick optical film of the invention between the light source and the LCD panel.

### Brief Description of the Drawings

FIG. 1 is a plot of Bulk Haze of samples of PET cast webs vs. Thickness and the legend describes the out-of-plane birefringence values of the stretched films;
FIG. 2 is a plot of Total Haze of samples of PET cast webs vs. Film Quench Efficiency; and
FIG. 3 is a plot of Total Haze of samples of PET cast webs vs. Crystallization Half Times of the films.

### Detailed Description

"Structured surface" means a surface that has at least one geometric feature thereon and that has been created by any technique that imparts a desired geometric feature or plurality of geometric features to a surface. Such geometric structures have a pitch of from 30 to 300 micrometers. Examples of such geometric features include regular elongated prisms, random elongated prisms, discrete prisms, or beaded structures. Such structures can be applied by either cast and cure methods or by melt extrusion replication methods.

"Biaxially stretched" refers to a process in which a film that is stretched in both in-plane directions. The absolute out-of-plane birefringence of the resulting film is substantially larger than zero, preferably larger than 0.05. Typical draw ratio in each in-plane direction ranges from 1.2 to 8;

Birefringence arises when the electron density distribution is no longer random in materials, causing light to travel at different speeds in different directions. In the case of films, birefringence can be obtained by either uniaxially or biaxially stretching the film. In order to characterize the birefringence of a given film, one usually defines the space according to the Cartesian coordinate system, taking the film surface as reference plane. In a roll-to-roll process, one takes the down-web direction within the film surface plane and names it machine direction (MD). The other in-plane direction that is perpendicular to the MD is the transverse direction (TD). The third direction is normal to the film surface plane and is named transmagnetic direction (TM). MD and TD are often referred as in-plane directions whereas TM is referred as out-of-plane direction.

For stretched films, the in-plane birefringence, $\Delta n_{in}$, is defined as the refractive index difference between the in-plane stretching direction and the in-plane un-stretched direction. For example, if a film was stretched in its TD direction, its in-plane birefringence is expressed by following equation:

$$\Delta n_{in} = n_{TD} - n_{MD} \qquad\qquad (1)$$

Its out-of-plane birefringence, $\Delta n_{out}$, is defined as the refractive index difference between the average refractive index of in-plane directions and the film normal direction, as shown by the following equation.

$$\Delta n_{out} = \frac{(n_{MD} + n_{TD})}{2} - n_{TM} \qquad\qquad (2)$$

Where $n_{MD}$, $n_{TD}$, $n_{TM}$ are refractive indices of the film in three directions.

For uniaxially stretched films, both in-plane and out-of-plane birefringence are substantially greater than zero due to their substantially positive stress-optical coefficients. For example, a constrained uniaxially stretched PET in TD direction by a draw ratio of 1x4 (MDxTD) will result in typical refractive indices of 1.54, 1.66, 1.51 for MD, TD and TM, respectively. In this case, the in-plane birefringence is 0.12 whereas out-of-plane birefringence is 0.09, according to the equations (1) and (2), indicating PET is a highly birefringent polymer.

On the other hand, both in-plane and out-of-plane birefringence can be substantially close to zero for non-birefringent polymers, or polymers with essentially zero stress-optical coefficient. For example, stretching of polycarbonate will typically result in birefringence less than 0.005 in both in-plane and out-of-plane directions, indicating PC is not a strongly birefringent polymer.

For biaxially stretched films, in-plane birefringence can be substantially zero when the film is stretched equally in both in-plane directions. At the same time, the out-of-plane birefringence can be substantially positive due to the positive birefringent nature of the material. Either in-plane or out-of-plane birefringence is substantially larger or smaller than zero, the polymer is substantially birefringent. For example, a biaxially stretched PET film will draw ratios of 3.5 in both MD and TD has typical refractive index of 1.65, 1.65, and 1.50 for MD, TD and TM, respectively. In this case, the in-plane birefringence is 0.0 whereas out-of-plane birefringence is 0.15, according to the equations (1) and (2). The 0.15 out-of-plane birefringence is substantially larger than zero, indicating PET is a positively birefringent polymer.

Desirably, the out-of-plane birefringence of the laminates of the invention is higher than 0. In other embodiments, the out-of-plane birefringence of the film of the invention is higher than 0.05, higher than 0.10, or 0.15 or higher.

In some embodiments the biaxially stretched films have high clarity. The transmission is at least 50%, preferably above 70%, most preferably above 85%.

In some embodiments the biaxially stretched films have low haze. The haze is less than 10%, preferably less than 7%, most preferably less than 5%.

In one embodiment, the invention provides polyethylene terephthalate (PET) films that are uniaxially or biaxially oriented and birefringent and have a thickness of at least 10 mils (0.25 mm), in other embodiments, at least 11 (0.28) mils (mm), 12 (0.30) mils (mm), 13 (0.33) mils (mm), 14 (0.36) mils (mm), 15 (0.38) mils (mm), 16 (0.41) mils (mm), 17 (0.43) mils (mm), 18 (0.46) mils (mm), 19 (0.48) mils (mm), 20 (0.51) mils (mm), 21 (0.53) mils (mm), 22 (0.56) mils (mm), 24 (0.61) mils (mm), or 25 (0.64) mils (mm). In other embodiments, the optical film can a thickness than ranges from 10 (0.25) to 25 mils (0.64 mm), and any range between 0.25 mm and 0.64 mm. In another embodiment, the optical films of the invention comprise a structured surface disposed on a polyester film base, the optical film having an overall thickness of at least 10 mils, and in other embodiments have a thickness of at least 11 (0.28) mils (mm), 12 (0.30) mils (mm), 13 (0.33) mils (mm), 14 (0.36) mils (mm), 15 (0.38) mils (mm), 16 (0.41) mils (mm), 17 (0.43) mils (mm), 18 (0.46) mils (mm), 19 (0.48) mils (mm), 20 (0.51) mils (mm), 21 (0.53) mils (mm), 22 (0.56) mils (mm), 24 (0.61) mils (mm), or 25 (0.64) mils (mm). In other embodiments, the optical film base can a thickness than ranges from 10 (0.25) to 25 mils (0.64 mm), and any range between 0.25 mm and 0.64 mm.

The PET resin used to make the films of the invention utilize the dicarboxylate monomers of terephthalic acid, and another dicarboxylate monomer other than terephthalic acid, or their dialkyl ester analogs, for example, dimethyl terephthalate, as the diacid component, and using ethylene glycol and another glycol other than ethylene glycol as the glycol component. Examples of other dicarboxylic acids include naphthalene dicarboxylic acid; phthalate dicarboxylic acid; isophthalate dicarboxylic acid; (meth)acrylic acid; maleic acid; itaconic acid; azelaic acid; adipic acid; sebacic acid; norbornene dicarboxylic acid; bicyclooctane dicarboxylic acid; 1,6-cyclohexane dicarboxylic acid; t-butyl isophthalic acid; trimellitic acid; 4,4'-biphenyl dicarboxylic acid; or combinations thereof, and which may be substituted by its dimethyl (alkyl) ester form.

In embodiments of the invention, the terephthalic acid component (or alkyl ester equivalent) is present in the resin composition in an amount of from 90 to 99.75 mol percent and in another embodiment, from 95 to 99.75 mol percent, based on 100 mol percent total carboxylic acid component. In another aspect, the terephthalic acid (or alkyl ester equivalent) component can be present in an amount of from 95 to 99.75 mole percent. In other aspects, the carboxylic acid component can be present in an amount of 95.1, 95.2, 95.3, 95.4, 95.5, 95.6, 95.7, 95.8, 95.9, 96, 96.1, 96.2, 96.3, 96.4, 96.5, 96.6, 96.7, 96.8, 96.9, 97, 97.1, 97.2, 97.3, 97.4, 97.5, 97.6, or 97.7 mole percent, or in any ranges of these amounts. The molar ratio of terephthalic acid to the other dicarboxylate monomer can vary from 13 to 500.

The PET resin used to make the films of the invention utilize the monomers ethylene glycol and at least one other glycol other than ethylene glycol as the glycol component. Examples of the other glycols include 1,6-hexanediol; 1,4-butanediol; trimethylolpropane; 1,4-cyclohexanedimethanol; 1,4-benzenedimethanol; diethylene glycol; neopentyl glycol; propylene glycol; polyethylene glycol; tricyclodecanediol; norbornane diol; bicyclooctanediol; pentaerythritol; bisphenol A; and 1,3-bis(2-hydroxyethoxy)benzene.

Ethylene glycol can be present in an amount from 90 to 100 mol percent based on 100 mol percent total glycol component of the polymer backbone.

The PET resin used to make the films of the invention utilize an ionic comonomer. The ionic comonomer may contain, but is not limited to, one or more of the acid moieties derived from carboxylic acid, sulfonic acid, phosphorous acid, acrylic acid, methacrylic acid, malice acid, and/or itaconic acid, or their dialkyl ester analogs. Furthermore, the ionic comonomer may contain, but is not limited to, one or more metal ions derived from sodium, potassium, lithium, zinc, magnesium, calcium, cobalt, iron, and/or antimony. Additionally, the ionic comonomer may contain, but is not limited to, one or more dicarboxylic moieties derived from phthalate, isophthalate, terephthalate, and/or naphthalate. Useful ionic comonomers include sulfonates.

A specific example of a useful sulfonate is dimethylsulfoisophthalate. Examples of useful counterions include those of sodium, potassium, lithium, zinc, magnesium, calcium, cobalt, iron, aluminum, or antimony counterions, or a combination thereof. A specific examples of a useful sulfonated salt is sodium salt of dimethyl-5-sulfoisophthalate.

In embodiments of the invention, the ionic comonomer is present in the resin composition in an amount of from 0.2 to 4 mol percent based on 100 mol percent of the dicarboxylic acid component. In other aspects, the ionic comonomer can be present in an amount of 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0 mol percent, or in any ranges of these amounts.

In one embodiment, a PET resin used to make the films of the invention comprises or consists essentially of, or consists of a reaction product of a reaction between a PET resin that has low quench efficiency and a modified PET resin with high quench efficiency. The resulting polymer is a blocky copolymer with improved, useful quench efficiency as long as the resultant co-reacted polymer is comprised of monomer ranges, proscribed to produce polymers having useful quench efficiency levels.

In another embodiment, a PET resin used to make the films of the invention can be made by coextruding a PET resin having low quench efficiency with a modified PET resin having high quench efficiency through a multilayer feedblock. In another embodiment, a 3-layer film is made using a modified PET resin having high quench efficiency as the core and a PET resin having a low efficiency as a skin layer or layers. An improved overall efficiency is obtained.

The PET films of the invention may be made generally by an extrusion/casting process. The resin or combination of 2 or more polyethylene terephthalate resins is/are melted in an extruder and the melt stream is directed to pass through a film die and the resulting extrudate is cast onto a casting wheel. The two or more polyethylene terephthalate resins are typically different resins, for example, different in molecular weight, reactive monomer ratios, types of other glycol component used, etc. Typically, the casting wheel is cooled, for example, with chilled water. Typically, an electrostatic pinning system is used to pin the extrudate to the casting wheel. As the extrudate cools on the casting wheel, the cast web forms. With a typical casting system, a clear cast web can be obtained up to about 100 mil (2.5 mm) thick. Typically cast webs thicker than 100 mils (2.5 mm) can not be quenched effectively due to low thermal conductivity of PET resin. As a result, the center of the cast web remains above the resin softening temperature for up to 200 seconds. During this time, the material at the center has enough time to form large crystallites, causing undesirable light scattering (that is, haze) in the cast web. Such a resulting thick cast web would not be useful for optical applications. Multiple layers of cast webs may also be coextruded.

In some embodiments of this invention, a cast web of up to 180 mils (4.6 mm) thick or greater, for example, 200 mils (5.1 mm) can be cast clear without haze, useful for optical applications due to high quench efficiency of the modified PET resins. In other embodiments, a cast web may have a thickness of from 100 mils (2.5 mm) to 200 mils (5.1 mm).

In other embodiments, transparent, biaxially oriented films of 11.5 (0.29), 14 (0.36), 15 (0.38), and 18 mil (0.46 mm) thick are demonstrated using the modified PET described in this invention. These thick, transparent PET films are not possible using current commercially available PET resins.

The cast web is then biaxially stretched to produce the thick optical film. In some embodiments, a dual-drawing step is used to produce biaxially stretched film. This process may be performed sequentially in a length orienter (LO) and a tenter. The length orienter draws the film in the machine direction and tenter draws the resulting film in the in-plane direction transverse to machine direction. Typical draw ratios are from 1.2 to 8.0. It is possible to produce the thick film by using just one step drawing process from a simultaneous biaxial orienter as disclosed in US 2006/0238682A1.

The invention also provides an optical display which utilizes the optical films of the invention. Typical optical displays comprise a light source, (for example, backlight or lightguide), an LCD panel, and an optical film of the invention positioned between the light source and the LCD panel. Typically, a structured surface of the optical film laminate would be facing up, or towards the LCD panel. The optical film may be adjacent to the light source or attached, or bonded to the light source.

The present invention is summarzed by the following items:

1. A polyethylene terephthalate film comprising:

a biaxially stretched and birefringent polyethylene terephthalate film having at least one layer having a thickness of from 10 mils (0.25 mm) to 25 mils (0.64 mm), wherein the film is formed from a polyethylene terephthalate resin comprising the reaction product of:

dimethyl terephthalate, terephthalic acid, or a combination thereof;
ethylene glycol;
a diol or triol monomer other than ethylene glycol; and
from 0.2 to 3 mol percent of a sulfonated monomer having an inorganic counterion based on 100 mol percent dimethyl terephthalate, terephthalic acid, or a combination thereof.

2. A polyethylene terephthalate film comprising:

a single layer, biaxially stretched and birefringent polyethylene terephthalate film having a thickness of from 10 mils (0.25 mm) to 25 mils (0.635 mm), wherein the film is formed from a polyester resin consisting essentially of the reaction product of:

dimethyl terephthalate, terephthalic acid, or a combination thereof;
ethylene glycol;
a second diol or triol monomer other than ethylene glycol; and

from 0.2 to 3 mol percent of a sulfonate monomer having an inorganic counterion based on 100 mol percent dimethyl terephthalate.

3. An optical film comprising:

a biaxially stretched and birefringent base film having at least one layer having an overall thickness of at least 10 mils (0.25 mm); and
a structured surface disposed on a surface of the base film, the base film comprising a polyester wherein the polyester comprises the reaction product of dicarboxylate monomer, glycol monomer, and from 0.2 to 3 mol percent of a sulfonated monomer having an inorganic counterion based on 100 mol percent dicarboxylate.

4. The optical film of item 1 or 2 further having a structured surface on a major surface of the optical film.

5. The optical film of item 4 wherein the structured surface comprises regular elongated prisms, random elongated prisms, discrete prisms, or beaded structures.

6. The optical film of any of the above items wherein the film comprises or consists essentially of a blend of polyethylene terephthalate and different polyester.

7. The optical film of any of the above items having at least two layers

8. An optical display comprising:

a light source;
an LCD panel; and
an optical film according to any of the above claims between the light source and the LCD panel.

9. The optical display of item 8 further comprising a protective sheet on a viewing surface of the LCD panel.

10. The optical display of item 9 wherein the viewing surface has at least a 94 cm diagonal.

11. The optical display of item 8 wherein the optical film is adjacent to the light source.

12. A method of making an optical film comprising the steps of:

    melt extruding and casting a web comprising polyester terephthalate having a thickness of up to 200 mils (5.1 mm); and
    stretching the cast film biaxially to form an optical film according to claim 1, 2, or 3.

13. The method of item 12 wherein the cast web has a thickness of from 100 mils (2.5 mm) to 200 mils (5.1 mm).

14. The method of item 12 wherein the cast web has an apparent haze of less than 30%.

15. The method of item 12 wherein the cast web has quench efficiency of at least 50%.

16. The optical film of item 1, 2, or 3 wherein the film has an out-of-plane birefringence of at least 0.05.

17. The optical film of item 1, 2, or 3 wherein the film has a total haze of no more than 5%.

18. The method of item 12 further comprising the step of coextruding the polyester terephthalate web with another polyester web and forming a cast web having at least two layers.

19. The optical film of any one of the above items wherein the resin comprises a blend of two or more polyethylene terephthalate resins.

The following examples illustrate aspects of the optical films of the invention.

**Examples**

Testing Methods:

Quench Efficiency:

The quench efficiency is measured using a TA Q2000 differential scanning calorimeter from TA Instruments (New Castle, DE). The sample is dried under vacuum of (<10 mmHg) for about 72 hrs at 60 °C before testing. A sample of about 5 mg is weighted and sealed in a hermetically sealed aluminum Tzero™ pan. A heating-cooling-heating ramp is conducted. The temperature range is 30-300°C. A constant heating rate of 20°C/min is used for the ramp. After the scan, the thermal trace is analyzed for melting and crystallization peaks. The crystallization exothermic heat (ΔHc) and melt endothermic heat (ΔHm) on the second heating are separately calculated using a master baseline from 100 to 280°C. The quench efficiency is calculated as following:

$$Quench\ Efficiency\ (QC) = \frac{|\Delta Hc|}{|\Delta Hm| + 0.0001} \times 100\% \qquad (3)$$

As shown above, the quench efficiency is dictated by ΔHc when ΔHm is about the same for different PET resins. Higher quench efficiencies indicate more amorphous phase present upon cooling from the melt at a given rate allowing for faster melt extrusion casting wheel speeds and thicker cast webs leading thicker, haze free finished film at higher web speeds; lower quench efficiencies lead to slower casting wheel speeds and/or thinner cast webs reducing maximum thickness for haze free film and slower web speeds. At 20 °C/min, polyesters films with quench efficiencies above 40% produced translucent to clear cast webs at thicknesses of 180 mils (4.6 mm).
For some polymers, there is no crystallization or melting on neither heating nor cooling curves. In this case, the QE is considered to be 100% for these polymers.

Crystallization Half Time Measurement:

Complimentary to quench efficiency measurements polyester terephthalate resins vacuum dried for 72 hrs at 60°C were melted in a TA Q2000 differential scanning calorimeter above 300 °C in aluminum, hermetically sealed Tzero™ pans, cooled at a rate of 90 °C/min to and held isothermally to crystallize at a temperature above $T_g$ (180°C, 190°C, 200°C, 210°C, 220°C, 230°C, 240°C, 250°C, 260°C, 270°C, 280°C, 290°C, and 300°C). The testing method and principles are described by Hu et al. (J. Appl. Polymer Sci 2002, 86, 98-115). Crystallization half time from quenching was determined from the time of maximum heat flow where longer half times lead to slow crystallization rates enabling faster melt extrusion casting wheel speeds and thicker cast webs leading thicker, haze free finished film at higher web speeds. Crystallization half times at a temperature of 210°C of various polymers were determined.

Measurement of Apparent Haze

Apparent Haze was tested using a Hazeguard® instrument from BYK-Garner USA. Haze was measured according to ASTM D-1003. The haze includes the surface haze and bulk haze. For cast web of 180mils thick, the surface haze is about 20% due to surface roughness.

Measurement of Bulk Haze

Bulk Haze was tested using the same Hazeguard® instrument from BYK-Garner USA and a clear quartz container with optically clear surfaces. The container is filled with deionized water. The haze value is first measured on the container with water as the background, Haze1. The film sample is then added into the container and haze is measured again, Haze2. During the measure, care is taken to make sure no air bubbles exist in the optical path and both surfaces of the sample are wet out. The bulk haze is defined as following:

$$Haze(bulk) = Haze2 - Haze1 \qquad (3)$$

This measurement eliminates the surface topological features in different samples. The difference between the absolute bulk haze and the value from above equation due to the refractive index mismatch is thought to be negligible and is a constant throughout the tests. For comparison of various cast web thicknesses (L), bulk haze was normalized to a thickness of 100 mil and defined as following:

$$100 \text{ mil Haze(bulk)} = \frac{Haze2 - Haze1}{L}(100 mil) \qquad (4)$$

Refractive Index Measurement

The refractive indices of the various samples were measured using a Metricon Prism coupler (Metricon Corporation, Pennington, N.J.) in the MD, TD, and TM directions. MD and TD are in-plane directions and TM is normal to the film surface.

NMR to Determine Chemical Composition

Samples from the materials were dissolved in a 1:1 mixture of deuterated chloroform and trifluoroacetic acid. 1D NMR spectra were collected on a 500 MHz instrument equipped with a dual channel Varian Chili probe. Integrations were carried out after phasing and baseline correction. Unless specified otherwise, all polymers compositions are verified using NMR.

Optical Gain Measurement

Gain of the prism coated film articles was measured on an illumination box, referred as a gain cube that was used as the light source. The gain cube comprised a highly reflective cavity, with the light passing out of a Teflon® surface to illuminate the samples. Baseline measurements were performed on top of the gain cube and then samples were placed on top of the gain cube and a measurement was taken. The gain was calculated by the luminance measured with a sample divided by the luminance measured without a sample on the gain cube.

Resins:

PET resin (INVISTA PET) commercially available from Invista (Wichita, KS) having the product grade of 8601

7

was examined. The resin has an intrinsic viscosity (I.V.) value of 0.61. INVISTA PET was composed of ethylene glycol and terephthalic acid.

INVISTA PET had a quench efficiency of 0% and a resulting film had an out-of-plane birefringence of 0.10 after biaxial stretching.

PET resin (DuPont Crystar PET) commercially available from DuPont (Wilmington, DE) under the brand name Crystar (grade 5005) was examined. The resin has an I.V. value of 0.85. DuPont Crystar PET was composed of ethylene glycol and terephthalic acid.

DuPont Crystar PET had a quench efficiency of 0% and a resulting film had an out-of-plane birefringence of 0.10 after biaxial stretching.

PET resin (Control PET) is a PET resin in which 0.18 mol% of the theoretically incorporated ethylene glycol moieties was replaced by trimethylol propane (TMP). This resin was made as follows: A batch reactor was charged with 158.9 kg dimethyl terephthalate (DMT), 0.2 kg of trimethylol propane (TMP), 108.1 kg ethylene glycol (EG), 32 g zinc(II) acetate, 32 g cobalt(II) acetate, and 80 g antimony(III) acetate. Under pressure of 239.2 kPa, this mixture was heated to 257 °C to remove esterification reaction by-product, methanol. After the methanol was completely removed, 64 g of triethyl phosphonoacetate was charged to the reactor and the pressure was then gradually reduced to below 500 Pa while heating to 277 °C. The condensation reaction by-product, ethylene glycol, was continuously removed until a resin having an intrinsic viscosity of about 0.60 dL/g, as measured in 60/40 wt.% phenol/o-dichlorobenzene at 23°C, was produced.

Control PET had a quench efficiency of 0% and a resulting film had an out-of-plane birefringence of 0.10 after biaxial stretching. Furthermore, this resin had a crystallization half time of 4.5 minutes at 210°C.

An amorphous PET resin (PETG 6763) commercially available from Eastman Chemical (Kingsport, TN), under the trade name of PETG 6763 was examined. PETG 6763 had an I.V. value of 0.76. PETG 6763 was composed of ethylene glycol (70 mol% glycol moieties), CHDM (30 mol% glycol moieties), and terephthalic acid.

PETG 6763 did not crystallize upon heating and cooling. By convention, PETG 6763 is considered to have a quench efficiency of close to 100%.

Resin X was a PET resin in which 5 mol% of the terephthalic acid diacid moieties was replaced by sodium sulfoisophthalic acid or its esters, and 17 mol% of the theoretically incorporated ethylene glycol moieties was replaced by neopentyl glycol (NPG) during monomer charging. Resin X was made as follows: A batch reactor was charged with 146.6 kg dimethyl terephthalate (DMT), 11.8 kg dimethyl sodium sulfoisophthalate (DMSSIP), 22.7 kg neopentyl glycol (NPG), 91.5 kg ethylene glycol (EG), 16 g zinc(II) acetate, 16 g cobalt(II) acetate, 142 g sodium acetate, and 79 g antimony(III) acetate. Under pressure of 239.2 kPa, this mixture was heated to 257 °C to remove esterification reaction by-product, methanol. After the methanol was completely removed, 29 g of triethyl phosphonoacetate was charged to the reactor and the pressure was then gradually reduced to below 500 Pa while heating to 277 °C. The condensation reaction by-product, ethylene glycol, was continuously removed until a resin having an intrinsic viscosity of about 0.40 dL/g, as measured in 60/40 wt.% phenol/o-dichlorobenzene at 23°C, was produced.

The resulting resin did not crystallize upon heating and cooling. By convention, Resin X is considered to have a quench efficiency of close to 100%.

Resin D was a PET resin in which 2 mol% of the terephthalic acid diacid moieties was replaced by sodium sulfoisophthalic acid or its esters, 3 mol% of the theoretically incorporated ethylene glycol moieties was replaced by neopentyl glycol (NPG), and 0.18 mol% of the theoretically incorporated ethylene glycol moieties was replaced by TMP. Resin D was made as follows: A stainless steel, oil jacketed batch reactor was charged with 22.01 kg dimethyl terephthalate (DMT), 0.69 kg dimethyl sodium sulfoisophthalate (DMSSIP), 0.36 kg neopentyl glycol (NPG), 15.58 kg ethylene glycol (EG), 28.2 g trimethylolpropane (TMP), 4.5 g zinc(II) acetate, 4.5 g cobalt(II) acetate, 11.3 g sodium acetate, and 11.3 g antimony(III) acetate. Under pressure (239.2 kPa), this mixture was heated to 257 °C with removal of ~7.41 kg of the esterification reaction by-product, methanol. After the methanol was completely removed, 9.1 g of triethyl phosphonoacetate was charged to the reactor and the pressure was then gradually reduced to below 500 Pa while heating to 277 °C. The condensation reaction by-product, ethylene glycol, was continuously removed until a resin having an intrinsic viscosity of about 0.50 dL/g, as measured in 60/40 wt.% phenol/o-dichlorobenzene at 23°C, was produced.

Resin D had a quench efficiency of 89% and a resulting film had an out-of-plane birefringence of larger than 0.07 after biaxial stretching. Furthermore, this resin had a crystallization half time of 26.3 minutes at 210°C.

Resin E was a PET resin in which 0.25 mol% of the terephthalic acid diacid moieties was replaced by sodium sulfoisophthalic acid or its esters, 3.0 mol% of the theoretically incorporated ethylene glycol moieties was replaced by 1,4-cyclohexanedimethanol (CHDM), and 0.18 mol% of the theoretically incorporated ethylene glycol moieties was replaced by TMP. Resin E was made as follows: A batch reactor was charged with 22.61 kg dimethyl terephthalate (DMT), 86.5 g dimethyl sodium sulfoisophthalate (DMSSIP), 505.1 g 1,4-cyclohexanedimethanol (CHDM), 15.71 kg ethylene glycol (EG), 28.5 g trimethylolpropane (TMP), 4.5 g zinc(II) acetate, 4.5 g cobalt(II) acetate, 2.3 g sodium acetate, and 11.3 g antimony(III) acetate. Under pressure of 239.2 kPa, this mixture was heated to 257 °C with removal of ~7.48 kg of the esterification reaction by-product, methanol. After methanol was completely removed, 9.08 g of triethyl phosphonoacetate was charged to the reactor and the pressure was then gradually reduced to below 500 Pa while heating to 277 °C. The condensation reaction by-product, ethylene glycol, was continuously removed until a polymer with an intrinsic viscosity of about 0.50 dL/g, as measured in 60/40 wt.% phenol/o-dichlorobenzene at 23°C, was produced.

Resin E had quench efficiency of 55% and a resulting film had an out-of-plane birefringence of larger than 0.07 after biaxial stretching. Furthermore, Resin E had a crystallization half time of 14.6 minutes at 210°C.

Resin F was a PET resin in which 2 mol% of the terephthalic acid diacid moieties was replaced by sodium sulfoisophthalic acid or its esters and 0.25 mol% of the theoretically incorporated ethylene glycol moieties was replaced by TMP. Resin F was made as follows: A batch reactor was charged with 21.34 kg dimethyl terephthalate (DMT), 1.36 kg dimethyl sodium sulfoisophthalate (DMSSIP), 15.63 kg ethylene glycol (EG), 27.9 g trimethylolpropane (TMP), 4.5 g zinc(II) acetate, 4.5 g cobalt(II) acetate, 18.2 g sodium acetate, and 11.3 g antimony(III) acetate. Under pressure of 239.2 kPa, this mixture was heated to 257 °C with removal of ~7.34 kg of the esterification reaction by-product, methanol. After methanol was completely removed, 9.08 g of triethyl phosphonoacetate was charged to the reactor and the pressure was then gradually reduced to below 500 Pa while heating to 277 °C. The condensation reaction by-product, ethylene glycol, was continuously removed until a resin having an intrinsic viscosity of about 0.50 dL/g, as measured in 60/40 wt.% phenol/o-dichlorobenzene at 23°C, was produced.

Resin F had a quench efficiency of 75% and a resulting film had an out-of-plane birefringence of larger than 0.07 after biaxial stretching. Furthermore, this polymer has a crystallization half time of 15.4 minutes at 210°C.

Resin G was a PET resin in which 4.0 mol% of the terephthalic acid diacid moieties was replaced by sodium sulfoisophthalic acid or its esters and 0.18 mol% of the theoretically incorporated ethylene glycol moieties was replaced by TMP. Resin G was made as follows: A batch reactor was charged with 21.34 kg dimethyl terephthalate (DMT), 13.57 kg dimethyl sodium sulfoisophthalate (DMSSIP), 15.63 kg ethylene glycol (EG), 0.2 g of 1,4-cyclohexanedimethanol (CHDM), 0.1 g of neopentyl glycol (NPG), 27.9 g trimethylolpropane (TMP), 4.5 g zinc(II) acetate, 4.5 g cobalt(II) acetate, 18.2 g sodium acetate, and 11.3 g antimony(III) acetate. Under pressure of 239.2 kPa, this mixture was heated to 257 °C with removal of ~7.34 kg of the esterification reaction by-product, methanol. After methanol was completely removed, 9.08 g of triethyl phosphonoacetate was charged to the reactor and the pressure was then gradually reduced to below 500 Pa while heating to 277 °C. The condensation reaction by-product, ethylene glycol, was continuously removed until a polymer with an intrinsic viscosity of about 0.50 dL/g, as measured in 60/40 wt.% phenol/o-dichlorobenzene at 23°C, was produced.

Resin G had a quench efficiency of 86% and a resulting film had an out-of-plane birefringence of larger than 0.07 after biaxial stretching. Furthermore, Resin G had a crystallization half time of 19.2 minutes at 210°C.

Resin H was a PET resin in which 1.0 mol% of the terephthalic acid diacid moieties was replaced by sodium sulfoisophthalic acid or its esters, and 5.3 mol% of the theoretically incorporated ethylene glycol moieties was replaced by neopentyl glycol (NPG). Resin H was made as follows: A batch reactor was charged with 22.04 kg dimethyl terephthalate (DMT), 339.6 g dimethyl sodium sulfoisophthalate (DMSSIP), 14.78 kg ethylene glycol (EG), 628.4 g of neopentyl glycol (NPG), 4.5 g zinc(II) acetate, 4.5 g cobalt(II) acetate, 11.2 g sodium acetate, and 11.2 g antimony(III) acetate. Under pressure of 239.2 kPa, this mixture was heated to 257 °C with removal of ~7.35 kg of the esterification reaction by-product, methanol. After methanol was completely removed, 8.95 g of triethyl phosphonoacetate was charged to the reactor and the pressure was then gradually reduced to below 500 Pa while heating to 277 °C. The condensation reaction by-product, ethylene glycol, was continuously removed until a polymer with an intrinsic viscosity of about 0.50 dL/g, as measured in 60/40 wt.% phenol/o-dichlorobenzene at 23°C, was produced.

Resin H had a quench efficiency of 64% and a resulting film had an out-of-plane birefringence of larger than 0.07 after biaxial stretching. Furthermore, Resin H had a crystallization half time of 17.5 minutes at 210°C.

Resin I was a PET resin in which 1.0 mol% of the terephthalic acid diacid moieties was replaced by sodium sulfoisophthalic acid or its esters, and 5 mol% of the theoretically incorporated the ethylene glycol moieties was replaced by 1,4-cyclohexanedimethanol (CHDM). Resin I was made as follows: A batch reactor was charged with 22.04 kg dimethyl terephthalate (DMT), 339.6 g dimethyl sodium sulfoisophthalate (DMSSIP), 14.80 kg ethylene glycol (EG), 826.6 g of 1,4-cyclohexanedimethanol (CHDM), 4.5 g zinc(II) acetate, 4.5 g cobalt(II) acetate, 11.2 g sodium acetate, and 11.2 g antimony(III) acetate. Under pressure of 239.2 kPa, this mixture was heated to 257 °C with removal of ~7.35 kg of the esterification reaction by-product, methanol. After methanol was completely removed, 8.95 g of triethyl phosphonoacetate was charged to the reactor and the pressure was then gradually reduced to below 500 Pa while heating to 277 °C. The condensation reaction by-product, ethylene glycol, was continuously removed until a polymer with an intrinsic viscosity of about 0.50 dL/g, as measured in 60/40 wt.% phenol/o-dichlorobenzene at 23°C, was produced.

Resin I had a quench efficiency of 81% and a resulting film had an out-of-plane birefringence of larger than 0.07 after biaxial stretching. Furthermore, Resin I had a crystallization half time of 22.9 minutes at 210°C.

Resin J was a PET resin in which 2.0 mol% of the terephthalic acid diacid moieties was replaced by sodium sulfoisophthalic acid or its esters, 3.18 mol% of the theoretically incorporated the ethylene glycol moieties was replaced by 1.5 mol% 1,4-cyclohexanedimethanol (CHDM), 1.5 mol% neopentyl glycol (NPG), and 0.18 mol% trimethylol propane (TMP. The polymer was made as follows: A batch reactor was charged with 22.01 kg dimethyl terephthalate (DMT), 0.69 kg dimethyl sodium sulfoisophthalate (DMSSIP), 15.69 kg ethylene glycol (EG), 250.2 g of 1, 4-cyclohexanedimethanol (CHDM), 180.7 g of neopentyl glycol (NPG), 28.2 g trimethylolpropane (TMP), 4.5 g zinc(II) acetate, 4.5 g cobalt(II) acetate, 11.3 g sodium acetate, and 11.3. g antimony(III) acetate. Under pressure of 239.2 kPa, this mixture was heated to 257 °C with removal of ~7.41 kg of the esterification reaction by-product, methanol. After methanol was completely removed, 9.08 g of triethyl phosphonoacetate was charged to the reactor and the pressure was then gradually reduced to below 500 Pa while heating to 277 °C. The condensation reaction by-product, ethylene glycol, was continuously removed until a polymer with an intrinsic viscosity of about 0.50 dL/g, as measured in 60/40 wt.% phenol/o-dichlorobenzene at 23°C, was produced.

Resin J had a quench efficiency of 77% and a resulting film had an out-of-plane birefringence of larger than 0.07 after biaxial stretching. Furthermore, Resin J had a crystallization half time of 17.1 minutes at 210°C.

Data describing properties of the resins and resulting films are summarized below in Table 1.

Films:

For Examples 1-7 and Comparative Examples 1-5, an extruded single-layer film was made on a pilot extrusion line using a single-layer feedblock and a film die. The total extrusion rate was 13.6 kg/hr (30 lbs/hr). The extrudate was cast with a film die onto a chill roll to make cast web. Specimens of the cast web were then stretched biaxially at 90°C at a rate of 100%/second to different draw ratios in a KARO IV batch stretching machine (Brückner Maschinenbau, Siegsdorf, Germany).

Comparative Example 1

Control PET was extruded into an 180 mil (4.6 mm) thick cast web. The cast web had an apparent haze of 100% and thus is not useful for making transparent, thick, biaxially oriented film.

Comparative Example 2

INVISTA PET was extruded into a 180 mil (4.6 mm) thick cast web. The cast web had an apparent haze of 100% and is thus not useful for making transparent, thick, biaxially oriented film.

Comparative Example 3

DuPont Crystar PET was extruded into a 180 mil (4.6 mm) thick cast web. The cast web had an apparent haze of 100% and thus is not useful for making transparent, thick, biaxially oriented film.

Comparative Example 4

PETG 6763 was extruded into a 180 mil (4.6 mm) thick cast web. The cast web was clear. The cast web had an apparent haze of less than 15%. However, when the cast web was stretched, the web breaks in the center portion and showed neither apparent strain-hardening nor neck propagation. As a result, PETG 6763 resin was not useful for producing useful biaxially stretched films. The out-of-plane birefringence of PETG 6763 film was measured to be typically less than 0.04.

Comparative Example 5

Resin X was extruded into an 180 mil (4.6 mm) thick cast web. The cast web was clear. The cast web had an apparent haze of less than 15%. However, when the cast web was stretched, the web breaks in the center portion and showed neither apparent strain-hardening nor neck propagation. As a result, Resin X was not useful for producing useful biaxially stretched films. The out-of-plane birefringence of Resin X film was measured to be typically less than 0.04.

Example 1

Resin D was extruded into a 180 mil (4.6 mm) thick cast web. The cast web was clear. The apparent haze was measured to be about 16% and its thickness was adequate for making transparent, oriented film up to 15 mils (0.38 mm) thick using a 3.5 by 3.5 draw ratio.

Example 2

Resin E was extruded into a 180 mil (4.6 mm) thick cast web. The apparent haze was measured to be about 98%. The cast web was adequate for making transparent, oriented film up to 15 mils (0.38 mm) thick using a 3.5 by 3.5 draw ratio.

Example 3

Resin F was extruded into a 180 mil (4.6 mm) thick cast web. The cast web was clear. The apparent haze was measured to be about 36% and the thickness was adequate for making transparent, oriented film up to 15 mils (0.38 mm) thick using a 3.5 by 3.5 draw ratio.

Example 4

Resin G was extruded into an 180 mil (4.6 mm) thick cast web. The cast web was clear. The apparent haze was measured to be about 22% and was useful for making transparent, oriented film up to 15 mils (0.38 mm) thick using a 3.5 by 3.5 draw ratio.

Example 5

Resin H was extruded into a 180 mil (4.6 mm) thick cast web. The cast web was largely clear. The apparent haze was measured to be about 66% and the thickness was adequate for making transparent, oriented film up to 15 mil (0.38 mm) thick using a 3.5 by 3.5 draw ratio.

Example 6

Resin I was extruded into a 180 mil thick (4.6 mm) cast web. The cast web was largely clear. The apparent haze was measured to be about 58% and the thickness was adequate for making transparent, oriented film up to 15 mils (0.38 mm) thick using a 3.5 by 3.5 draw ratio.

Example 7

Resin J was extruded into a 180 mil thick (4.6 mm) cast web. The cast web was largely clear. The apparent haze was measured to be about 13% and the thickness was adequate for making transparent, oriented film up to 15 mils (0.38 mm) thick using a 3.5 by 3.5 draw ratio.

For Examples 8-13 and Comparative Example 6 , an extruded single-layer film was made on a pilot extrusion line using a single-layer feedblock and a film die. The total extrusion rate was 272 kg/hr (600 lbs/hr). The extrudate was cast with a film die onto a chill roll to make cast web.

Comparative Example 6

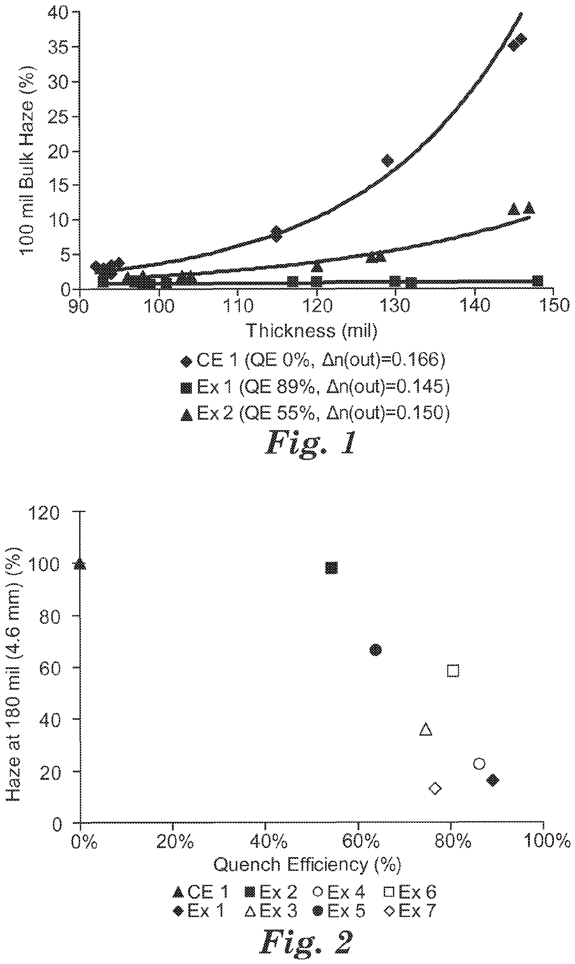

Control PET was extruded into a series of cast webs of 85 (2.2), 95 (2.4), 115 (2.92), 128 (3.25), and 145 mils (3.68 mm) thick. The bulk haze of these cast webs were measured and are presented as a function of cast web thickness in Figure 2.

Example 8

Resin E was extruded into a series of cast webs of 85 (2.2), 98 (2.5), 100 (2.54), 120 (3.0), 130 (3.3), and 148 mils (3.76 mm) thick. The bulk haze of these cast webs were measured and are presented as a function of cast web thickness in Figure 2.

Example 9

Resin D was extruded into a series of cast webs of 85 (2.2), 98 (2.5), 100 (2.54), 120 (3.0), 130 (3.3), and 148 mils (3.76 mm) thick. The bulk haze of these cast webs are measured. The bulk haze of these cast webs were measured and are presented as a function of cast web thickness in Figure 2.

Specimens of the cast webs of Examples 8 and 9 were then stretched biaxially at a temperature of 100 °C at a rate of 20-60%/second to different draw ratios in a KARO IV batch stretching machine (Bruckner Maschinenbau, Siegsdorf, Germany).

### Example 10

A 120 mil (3.0 mm) thick cast web made from Resin D was stretched by a draw ratio of about 2.8 x 2.9 (MD x TD). A highly transparent, uniform, a 15 mil (0.38 mm) thick film was obtained. The haze and transmittance were 1.3% and 91%, respectively. The out-of-plane birefringence of this film was 0.040. After heat set at 200 °C for 30 s, the film remained clear and the out-of-plane birefringence was 0.093.

### Example 11

A 100 mil (2.54 mm) thick cast web made from Resin D was stretched by a draw ratio of about 3.3 x 2.9 (MD x TD). A highly transparent, uniform, 11.5 mil (0.29 mm) thick film was obtained. The out-of-plane birefringence of this film was 0.065. The haze and transmittance were 0.8% and 91%, respectively. After heat set at 200 °C for 30 s, the film remained clear and the out-of-plane birefringence was 0.154.

### Example 12

A 130 mil (3.3 mm) thick cast web was made from Resin D was stretched by a draw ratio of about 2.9 x 2.5 (MD x TD). A highly transparent, uniform, 18 mil (0.46 mm) thick film was obtained. The out-of-plane birefringence of this film was 0.063. The haze and transmittance were 1.5% and 91%, respectively. After heat set at 200 °C for 30 s, the film remained clear and the out-of-plane birefringence was 0.10.

### Example 13

A 120 mil (3.0 mm) thick cast web made from Resin E was stretched by a draw ratio of about 2.5 x 3.1 (MD x TD). A highly transparent, uniform, 14 mil (0.36 mm) thick PET film was obtained. The out-of-plane birefringence of this film was 0.038. The haze and transmittance were 2.1 % and 91%, respectively. After heat set at 200 °C for 30 s, the film remained clear and the out-of-plane birefringence was 0.103.

### Example 14

A coextruded cast web containing 3 layers was made on a pilot extrusion line using a 3-layer ABA (skin/core/skin) feedblock. The Layer A polymer was Control PET, and was fed by a single screw extruder to the skin channel of the feedblock. The Layer B polymer was PETG6763, which was fed by a twin screw extruder to the core channel of the feedblock. The feed ratio for skin/core/skin was 1:1:1 by weight. The total extrusion rate was 13.6 kg/hr (30 lbs/hr). The extrudate was cast with a film die onto a chill roll to make cast web of about 180 mil (4.6 mm) in total thickness. The cast web film was clear.

### Examples 15, 16, and 17

Resin X and Control PET were blended in an extruder during extrusion. The blend ratios (Resin X/Control PET) were 5/95; 10/90; and 15/85 by weight, respectively. Effective block-copolyesters were made during the extrusion due to the transesterification reaction that occurred in the melt. As a result, the quench efficiency of each of the blends was improved over the virgin PET. Cast webs of about 60 mils (1.5 mm) in thickness were made. The cast webs appeared to be less hazy than those made using only Control PET at a similar thickness.

The data in FIG. 1 show that thick films with low haze made using modified PET resin provided high out-of-plane birefringence.

The data in FIG. 2 show that typically film haze is low when the film quench efficiency is higher than 50%.

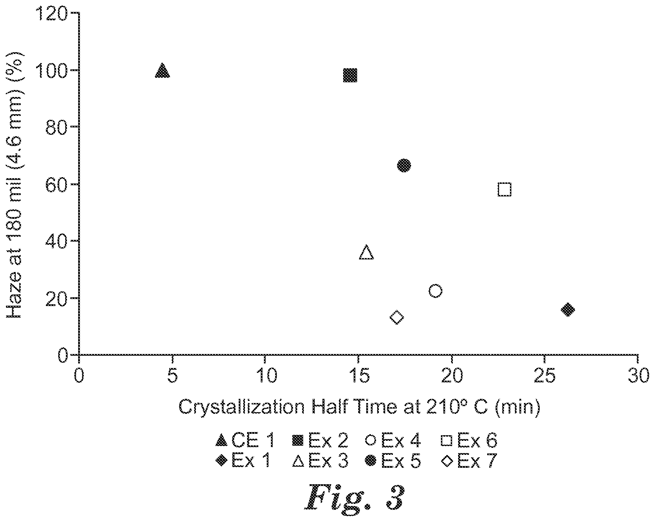

The data in FIG. 3 show that low haze using modified PET resins were obtained when the crystallization half time was longer than 15 minutes.

### Optical Films

### Comparative Example 7

An 85 mil (2.2 mm) thick cast web made from Control PET (from Comparative Example 6) was stretched in a length orienter and a tenter to produce a 7 mil (0.2 mm) thick finished film. The draw ratio was 3.5x3.5. The film was then heat set in a tenter oven for about 30s at about 220 °C. The resulting film had an out-of-plane birefringence of 0.166. The resulting film was then coated with an acrylic resin using a roll to roll process and a prism mold was used to impart a surface structure. The structure was fixed by curing the acrylic resin under a UV lamp. The resulting film had optical brightness enhancement function and its optical gain was measured to be 1.65.

Example 18

An 85 mil (2.2 mm) thick cast web made from Resin E (from Comparative Example 6) was stretched in a length orienter and a tenter to produce a 7 mil (0.2 mm) thick finished film. The draw ratio was 3.5 x 3.5. The film was then heat set in a tenter oven for about 30s at about 220 °C. The resulting film had an out-of-plane birefringence of 0.150. The resulting film was then coated with an acrylic resin using a roll to roll process and a prism mold was used to impart a surface structure. The structure was fixed by curing the acrylic resin under a UV lamp. The resulting film had optical brightness enhancement function and its optical gain was measured to be 1.64.

Example 19

An 85 mil (2.2 mm) thick cast web made from Resin D (from Example 9) was stretched in a length orienter and a tenter to produce a 7 mil (0.2 mm) thick finished film. The draw ratio was 3.5x3.5. The film was then heat set in a tenter oven for about 30 s at about 220 °C. The resulting film had an out-of-plane birefringence of 0.145. The resulting film was then coated with an acrylic resin by a roll to roll process and a prism mold was used to impart a surface structure. The structure was fixed by curing the acrylic resin under a UV lamp. The resulting film had optical brightness enhancement function and its optical gain was measured to be 1.64.

**Table 1.**

| Desc. | EG (mol%) | TA (mol%) | NPG (mol%) | SSIPA (mol%) | CHDM (mol%) | TMP (mol%) | Cast Web Haze 180mil (4.6 mm) | Film Flatness After Stretching | Out-of-Plane Birefringence Stretched Film | Crystallization 1/2 Time @ 210°C, min | Quench Efficiency |
|---|---|---|---|---|---|---|---|---|---|---|---|
| INVISTA PET | 100 | 100 | 0 | 0 | 0 | 0 | 100% | G | G | n/a | 0% |
| DuPont Crystar PET | 100 | 100 | 0 | 0 | 0 | 0 | 100% | G | G | n/a | 0% |
| Control PET | 100 | 100 | 0 | 0 | 0 | 0.18 | 100% | G | G | 4.5 | 0% |
| PETG 6763 | 70 | 100 | 0 | 0 | 30 | 0 | <15% | NG | NG | >40 | 100% |
| Resin X | 83 | 95 | 17 | 5 | 0 | 0 | <15% | NG | NG | >40 | 100% |
| Resin D | 97 | 98 | 3 | 2 | 0 | 0.18 | 16% | G | G | 26.3 | 89% |
| Resin E | 97 | 100 | 0 | 0.25 | 3 | 0.18 | 98% | G | G | 14.6 | 55% |
| Resin F | 100 | 98 | 0 | 2 | 0 | 0.25 | 36% | G | G | 15.4 | 75% |
| Resin G | 100 | 96 | 0 | 4 | 0 | 0.18 | 22% | G | G | 19.2 | 86% |
| Resin H | 95 | 99 | 5.3 | 1 | 0 | 0 | 66% | G | G | 17.5 | 64% |
| Resin I | 95 | 99 | 0 | 1 | 5 | 0 | 58% | G | G | 22.9 | 81% |
| Resin J | 97 | 98 | 1.5 | 2 | 1.5 | 0.18 | 13% | G | G | 17.1 | 77% |
| | | | | | | | | | | | |
| | | | | | | | Low: Desirable | G: Flat NG: not flat or broken, not useful for application | G: >0.05 NG: <0.05 | High: Desirable | High: Desirable |

**Claims**

1. A polyethylene terephthalate film comprising:

   a biaxially stretched and birefringent polyethylene terephthalate film having at least one layer having a thickness of from 10 mils (0.25 mm) to 25 mils (0.64 mm), wherein the film is formed from a polyethylene terephthalate resin comprising the reaction product of:

   dimethyl terephthalate, terephthalic acid, or a combination thereof;
   ethylene glycol;
   a diol or triol monomer other than ethylene glycol; and
   from 0.2 to 3 mol percent of a sulfonated monomer having an inorganic counterion based on 100 mol percent dimethyl terephthalate, terephthalic acid, or a combination thereof.

2. A polyethylene terephthalate film according to claim 1 comprising:

   a single layer, biaxially stretched and birefringent polyethylene terephthalate film having a thickness of from 10 mils (0.25 mm) to 25 mils (0.635 mm), wherein the film is formed from a polyester resin consisting essentially of the reaction product of:

   dimethyl terephthalate, terephthalic acid, or a combination thereof;
   ethylene glycol;
   a second diol or triol monomer other than ethylene glycol; and

   from 0.2 to 3 mol percent of a sulfonate monomer having an inorganic counterion based on 100 mol percent dimethyl terephthalate.

3. An optical film comprising:

   a biaxially stretched and birefringent base film having at least one layer having an overall thickness of at least 10 mils (0.25 mm); and
   a structured surface disposed on a surface of the base film, the base film comprising a polyester wherein the polyester comprises the reaction product of dicarboxylate monomer, glycol monomer, and from 0.2 to 3 mol percent of a sulfonated monomer having an inorganic counterion based on 100 mol percent dicarboxylate.

4. The optical film of claim 1 or 2 further having a structured surface on a major surface of the optical film.

5. The optical film of claim 4 wherein the structured surface comprises regular elongated prisms, random elongated prisms, discrete prisms, or beaded structures.

6. The optical film of any of the above claims wherein the film comprises or consists essentially of a blend of polyethylene terephthalate and different polyester.

7. The optical film of any of the above claims having at least two layers.

8. An optical display comprising:

   a light source;
   an LCD panel; and
   an optical film according to any of the above claims between the light source and the LCD panel.

9. The optical display of claim 8 further comprising a protective sheet on a viewing surface of the LCD panel.

10. The optical display of claim 9 wherein the viewing surface has at least a 94 cm diagonal.

11. The optical display of claim 8 wherein the optical film is adjacent to the light source.

12. A method of making an optical film comprising the steps of:

melt extruding and casting a web comprising polyester terephthalate having a thickness of up to 200 mils (5.1 mm); and

stretching the cast film biaxially to form an optical film according to claim 1, 2, or 3.

13. The method of claim 12 wherein the cast web has a thickness of from 100 mils (2.5 mm) to 200 mils (5.1 mm).

14. The method of claim 12 wherein the cast web has an apparent haze of less than 30%.

15. The method of claim 12 wherein the cast web has quench efficiency of at least 50%.


**Patentansprüche**

1. Polyethylenterephthalatfolie, umfassend:

eine biaxial gestreckte und doppelbrechende Polyethylenterephthalatfolie mit mindestens einer Schicht mit einer Dicke von 0,25 mm (10 mils) bis 0,64 mm (25 mils), wobei die Folie aus einem Polyethylenterephthalatharz gebildet ist, welches das Reaktionsprodukt umfasst von:

Dimethylterephthalat, Terephthalsäure oder einer Kombination davon;
Ethylenglycol;
einem Diol- oder Triolmonomer mit Ausnahme von Ethylenglycol; und
0,2 bis 3 Molprozent eines sulfonierten Monomers mit einem anorganischen Gegenion, basierend auf 100 Molprozent Dimethylterephthalat, Terephthalsäure oder einer Kombination davon.

2. Polyethylenterephthalatfolie nach Anspruch 1, umfassend:

eine einschichtige, biaxial gestreckte und doppelbrechende Polyethylenterephthalatfolie mit einer Dicke von 0,25 mm (10 mils) bis 0,635 mm (25 mils), wobei die Folie aus einem Polyesterharz gebildet ist, das im Wesentlichen aus dem Reaktionsprodukt besteht von:

Dimethylterephthalat, Terephthalsäure oder einer Kombination davon;
Ethylenglycol;
einem zweiten Diol- oder Triolmonomer mit Ausnahme von Ethylenglycol; und
0,2 bis 3 Molprozent eines Sulfonatmonomers mit einem anorganischen Gegenion, basierend auf 100 Molprozent Dimethylterephthalat.

3. Optische Folie, umfassend:

eine biaxial gestreckte und doppelbrechende Basisfolie mit mindestens einer Schicht mit einer Gesamtdicke von mindestens 0,25 mm (10 mils); und
eine strukturierte Oberfläche, die auf einer Oberfläche der Basisfolie angeordnet ist, wobei die Basisfolie einen Polyester umfasst, wobei der Polyester das Reaktionsprodukt von Dicarboxylatmonomer, Glycolmonomer und 0,2 bis 3 Molprozent eines sulfonierten Monomers mit einem anorganischen Gegenion, basierend auf 100 Molprozent Dicarboxylat, umfasst.

4. Optische Folie nach Anspruch 1 oder 2, ferner aufweisend eine strukturierte Oberfläche auf einer Hauptoberfläche der optischen Folie.

5. Optische Folie nach Anspruch 4, wobei die strukturierte Oberfläche regelmäßige längliche Prismen, zufällig längliche Prismen, diskrete Prismen oder Perlstrukturen umfasst.

6. Optische Folie nach einem der vorstehenden Ansprüche, wobei die Folie im Wesentlichen eine Mischung von Polyethylenterephthalat und anderem Polyester umfasst oder daraus besteht.

7. Optische Folie nach einem der vorstehenden Ansprüche, aufweisend mindestens zwei Schichten.

8. Optische Anzeigevorrichtung, umfassend:

eine Lichtquelle;
ein LCD-Panel; und
eine optische Folie nach einem der vorstehenden Ansprüche zwischen der Lichtquelle und dem LCD-Panel.

**9.** Optische Anzeigevorrichtung nach Anspruch 8, ferner umfassend eine Schutzabdeckung auf einer Betrachtungsoberfläche des LCD-Panels.

**10.** Optische Anzeigevorrichtung nach Anspruch 9, wobei die Betrachtungsoberfläche mindestens eine Diagonale von 94 cm aufweist.

**11.** Optische Anzeigevorrichtung nach Anspruch 8, wobei die optische Folie der Lichtquelle benachbart ist.

**12.** Verfahren zur Herstellung einer optischen Folie, umfassend die Schritte:

Schmelzextrudieren und Gießen einer Polyesterterephthalat umfassenden Bahn mit einer Dicke von bis zu 5,1 mm (200 mils); und
biaxiales Strecken der gegossenen Folie, um eine optische Folie nach Anspruch 1, 2 oder 3 zu bilden.

**13.** Verfahren nach Anspruch 12, wobei die gegossene Bahn eine Dicke von 2,5 mm (100 mils) bis 5,1 mm (200 mils) aufweist.

**14.** Verfahren nach Anspruch 12, wobei die gegossene Bahn eine erkennbare Trübung von weniger als 30 % aufweist.

**15.** Verfahren nach Anspruch 12, wobei die gegossene Bahn einen Abkühlwirkungsgrad von mindestens 50 % aufweist.


**Revendications**

**1.** Film de téréphtalate de polyéthylène comprenant :

un film de téréphtalate de polyéthylène biaxialement étiré et biréfringent possédant au moins une couche ayant une épaisseur allant de 0,25 mm (10 mils) à 0,64 mm (25 mils), où le film est formé à partir d'une résine de téréphtalate de polyéthylène comprenant le produit de réaction de :

téréphtalate de diméthyle, acide téréphtalique, ou une combinaison de ceux-ci ;
éthylène glycol ;
un monomère de diol ou triol autre que l'éthylène glycol ; et
de 0,2 à 3 pour cent molaires d'un monomère sulfoné possédant un contre-ion inorganique sur la base de 100 pour cent molaires de téréphtalate de diméthyle, d'acide téréphtalique, ou d'une combinaison de ceux-ci.

**2.** Film de téréphtalate de polyéthylène selon la revendication 1, comprenant :

un film de téréphtalate de polyéthylène monocouche biaxialement étiré et biréfringent ayant une épaisseur allant de 0,25 mm (10 mils) à 0,635 mm (25 mils), où le film est formé à partir d'une résine de polyester constituée pratiquement du produit de réaction de :

téréphtalate de diméthyle, acide téréphtalique, ou une combinaison de ceux-ci ;
éthylène glycol ;
un deuxième monomère de diol ou triol autre que l'éthylène glycol ; et
de 0,2 à 3 pour cent molaires d'un monomère sulfonate possédant un contre-ion inorganique sur la base de 100 pour cent molaires de téréphtalate de diméthyle.

**3.** Film optique comprenant :

un film de base biaxialement étiré et biréfringent possédant au moins une couche ayant une épaisseur globale d'au moins 0,25 mm (10 mils) ; et
une surface structurée disposée sur une surface du film de base, le film de base comprenant un polyester, dans lequel le polyester comprend le produit de réaction d'un monomère dicarboxylate, d'un monomère glycol, et de 0,2 à 3 pour cent molaires d'un monomère sulfoné possédant un contre-ion inorganique sur la base de 100 pour cent molaires de dicarboxylate.

**4.** Film optique selon la revendication 1 ou 2, ayant en outre une surface structurée sur une surface principale du film optique.

**5.** Film optique selon la revendication 4, dans lequel la surface structurée comprend des prismes allongés réguliers, des prismes allongés aléatoires, des prismes distincts, ou des structures en perles.

**6.** Film optique selon l'une quelconque des revendications précédentes, où le film comprend ou est constitué pratiquement d'un mélange de téréphtalate de polyéthylène et d'un polyester différent.

**7.** Film optique selon l'une quelconque des revendications précédentes, possédant au moins deux couches.

**8.** Affichage optique comprenant :

une source de lumière ;
un panneau à cristaux liquides ; et
un film optique selon l'une quelconque des revendications précédentes entre la source de lumière et le panneau à cristaux liquides.

**9.** Affichage optique selon la revendication 8, comprenant en outre une feuille de protection sur une surface de visualisation du panneau à cristaux liquides.

**10.** Affichage optique selon la revendication 9, dans lequel la surface de visualisation a une diagonale d'au moins 94 cm.

**11.** Affichage optique selon la revendication 8, dans lequel le film optique est adjacent à la source de lumière.

**12.** Procédé de fabrication d'un film optique, comprenant les étapes consistant à :

extruder en fusion et couler une bande comprenant du téréphtalate de polyester possédant une épaisseur allant jusqu'à 5,1 mm (200 mils) ; et
étirer biaxialement le film coulé pour former un film optique selon la revendication 1, 2 ou 3.

**13.** Procédé selon la revendication 12, dans lequel la bande coulée a une épaisseur allant de 2,5 mm (100 mils) à 5,1 mm (200 mils).

**14.** Procédé selon la revendication 12, dans lequel la bande coulée a un trouble apparent inférieur à 30 %.

**15.** Procédé selon la revendication 12, dans lequel la bande coulée a une efficacité d'extinction d'au moins 50 %.

*Fig. 1*

*Fig. 2*

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070242184 A1

- US 20060238682 A1

**Non-patent literature cited in the description**

- **HU et al.** *J. Appl. Polymer Sci,* 2002, vol. 86, 98-115